# EUROPEAN PATENT APPLICATION

(11) **EP 2 894 375 A1**
(43) Date of publication of application: **15.07.2015**
(21) Application number: 13275177.7
(22) Date of filing: 31.07.2013
(51) Int. Cl.: F16H 57/12, F16H 1/22, F16H 55/18, F16D 3/64

(54) **A gear assembly**

(71) Applicant: Astrium Limited, Stevenage, Hertfordshire SG1 2AS (GB)
(72) Inventor: The designation of the inventor has not yet been filed
(74) Representative: Brown, Alexander Edward

(57) **Abstract**

A gear assembly is disclosed. The gear assembly comprises an input drive gear (12) in meshing engagement with first and second intermediate gears (13, 14) and an output load gear (11) in meshing engagement with third and fourth intermediate gears (15, 16). A first coupling (18A) is provided between the first and third intermediate gears (13, 15) and is configured so that rotation of the first intermediate gear (13) causes rotation of the third intermediate gear (15). A second coupling (18B) is provided between the second and fourth intermediate gears (14, 16) and is configured so that rotation of the second intermediate gear (14) causes rotation of the fourth intermediate gear (16).

## Description

### Technical Field

The present invention relates to a gear assembly for accurate rotational movement of a gear wheel and, in particular, such an assembly capable of incremental rotational movement with reduced backlash effects. The invention also relates to gear system and to a structure comprising a gear assembly according to the invention.

### Background

Spacecraft, such as scientific and telecommunication satellites, include various instruments and devices that require deployment from the spacecraft in use, and/or require accurate positioning and realignment in use. For example, a satellite may comprise a deployable thermal radiator, an antenna on a boom or directly on the satellite structure that requires deployment, pointing and trimming in use, or a propulsion unit, mounted directly on the satellite or on a deployable boom, which requires accurate deployment and adjustment to provide spacecraft attitude control. It is therefore important that the driving mechanisms for such instruments and devices are capable of providing accurate control over their positioning for optimum operation, such as incremental rotational movement over small angles, or small deployment distance. Therefore, it is desirable to reduce the effects of backlash in such mechanisms so that when set at a desired position, the mechanism is not susceptible to accidental movement induced by vibration or other externally generated loads.

### Summary

In accordance with embodiments of the invention, there is provided a gear assembly comprising an input drive gear in meshing engagement with first and second intermediate gears, an output load gear in meshing engagement with third and fourth intermediate gears, a first coupling between the first and third intermediate gears configured so that rotation of the first intermediate gear causes rotation of the third intermediate gear, and a second coupling between the second and fourth intermediate gears configured so that rotation of the second intermediate gear causes rotation of the fourth intermediate gear.

In one embodiment, the gears each comprise a plurality of teeth, and wherein a tooth of each of the first and second intermediate gears abut first and second teeth of the input drive gear respectively and a tooth of each of the third and fourth intermediate gears abut first and second teeth of the output load gear respectively. In one such embodiment, each tooth of the input drive gear comprises a first portion facing generally in a first rotational direction and a second portion facing generally in a second rotational direction opposite the first rotational direction, and wherein the first portion of a tooth of the input drive gear abuts a tooth of the first intermediate gear and the second portion of a tooth of the input drive gear abuts a tooth of the second intermediate gear for all rotational positions of the input drive gear.

In one embodiment, the first coupling is configured so that a torsional force exists between the first and third intermediate gears such that the first intermediate gear acts to exert a torque on the input drive gear in a first rotational direction and the third intermediate gear acts, through the load, fourth and second intermediate gears, to exert a torque on the input drive gear in a second rotational direction opposite the first rotational direction. In one such embodiment, said torsional force between the first and third intermediate gears is present when the input drive gear is stationary

In one embodiment, said torsional force between the first and third intermediate gears is provided by a torsional spring element. The gear assembly may comprise a rotatable hub that is rigidly coupled to one of the first and third intermediate gears and is rotatably coupled to the other of the first and third intermediate gears and is rotatably biased relative thereto by the torsional spring element. In one such embodiment, the other of the first and third intermediate gears comprises a radially inwardly facing surface and a first end of the torsional spring element is mounted to said radially inwardly facing surface, and wherein the rotatable hub comprises a radially outwardly facing surface and a second end of the torsional spring element is mounted to said radially outwardly facing surface. The rotatable hub may be disposed within the other of the first and third intermediate gears and is concentrically arranged therewith.

In another embodiment, the first coupling comprises a shaft that is pre-loaded under torsion to provide said torsional force between the first and third intermediate gears. In yet another embodiment, the first coupling is configured such that the first intermediate gear is held in a fixed rotational position relative to the third intermediate gear.

In one embodiment, the second coupling is configured so that a torsional force exists between the second and fourth intermediate gears such that the second intermediate gear acts to exert a torque on the input drive gear in the second rotational direction and the fourth intermediate gear acts, through the load, third and first intermediate gears, to exert a torque on the input drive gear in the first rotational direction. In one such embodiment, the torsional force between the second and fourth intermediate gears is present when the input drive gear is stationary.

In one embodiment, said torsional force between the second and fourth intermediate gears is provided by a torsion spring element. In another embodiment, said torsional force between the second and fourth intermediate gears is provided by a shaft that is pre-loaded under torsion.

In one embodiment, the second coupling is configured such that the second intermediate gear is held in a fixed rotational position relative to the fourth intermediate gear.

In one embodiment, the first coupling is configured such that the first and third intermediate gears rotate in the same rotational direction and/or the second coupling is configured such that the second and fourth intermediate gears rotate in the same rotational direction.

In one embodiment, the input drive gear is coupled to a stepper motor that is configured to drive the input drive gear.

The invention also provides a gear system comprising first and second gear assemblies, wherein the output load gear of the first gear assembly is coupled to the input drive gear of the second gear assembly.

The invention also provides a structure for deployment in space comprising a gear assembly according to the invention.

The invention also provides a gear assembly comprising a first gear, a second gear, a rotatable hub and a torsional spring element, wherein the rotatable hub is rigidly coupled to the first gear and is rotatably coupled to the second gear and is rotatably biased relative to the second gear in a first rotational direction by the torsional spring element.

In one embodiment, the second gear comprises a radially inwardly facing surface and a first end of the torsional spring element is mounted to said radially inwardly facing surface, and wherein the rotatable hub comprises a radially outwardly facing surface and a second end of the torsional spring element is mounted to said radially outwardly facing surface.

In one embodiment, the rotatable hub is disposed within the second gear and is concentrically arranged therewith. The torsional spring element may be integrally formed with the second gear and the rotatable hub.

In one embodiment, the spring element comprises a curved portion of resilient material that is configured so that it is straightened when the first gear is rotated relative to the second gear in a second rotational direction opposite the first rotational direction.

### Brief Description of the Drawings

Embodiments of the present invention will now be described, by way of example only, with reference to the accompanying drawings, in which:
Figure 1 is a schematic view of a known gear assembly;
Figure 1A is a close-up view of part of the gear assembly of Figure 1;
Figure 2 is a schematic view of the gear assembly of Figure 1, in a second rotational position;
Figure 2A is a close-up view of part of the gear assembly of Figure 2;
Figure 3 is a schematic view of the gear assembly of Figure 1, in a third rotational position;
Figure 3A is a close-up view of part of the gear assembly of Figure 3;
Figure 4 is a perspective view of a gear assembly according to a first embodiment of the invention;
Figure 4A is a close-up view of a second intermediate gear and a drive gear of the gear assembly of Figure 4;
Figure 4B is a close-up view of a first intermediate gear and the drive gear of the gear assembly of Figure 4;
Figure 4C is a close-up view of a fourth intermediate gear and a load gear of the gear assembly of Figure 4;
Figure 4D is a close-up view of a third intermediate gear and the load gear of the gear assembly of Figure 4;
Figure 5 is a top view of the gear assembly of Figure 4;
Figure 5A is a schematic view of the gear assembly of Figure 4;
Figure 6 is a front view of the gear assembly of Figure 4;
Figure 7 is an exploded perspective view of a biasing member of the gear assembly of Figure 4;
Figure 8 is a perspective view of the biasing member of Figure 7;
Figure 9 is a perspective view of a gear assembly according to a second embodiment of the invention;
Figure 10 is a top view of the gear assembly of Figure 9;
Figure 10A is a schematic view of the gear assembly of Figure 9;
Figure 11 is a perspective view of a gear assembly according to a third embodiment of the invention; and,
Figure 12 is a top view of the gear assembly of Figure 11.

### Detailed Description

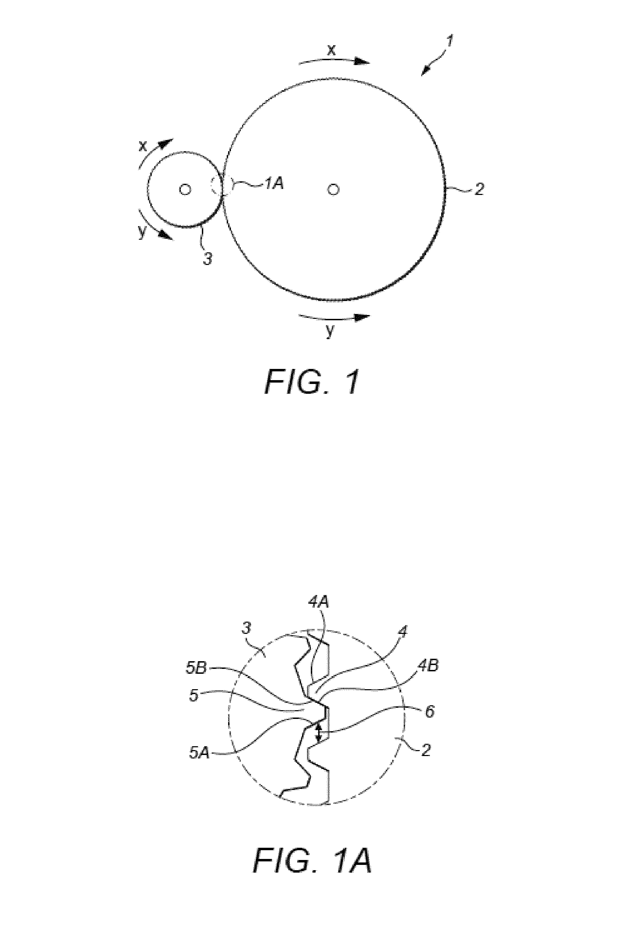

A gear assembly 1 of a known configuration is shown in Figures 1 to 3A and comprises a spur gear 2 that is mechanically coupled to a load (not shown) and a pinion gear 3 that is driven by a motor (not shown). The spur and pinion gears 2, 3 are rotatable in a first rotational direction (shown by arrow 'X' in Figure 1) and a second rotational direction (shown by arrow 'Y' in Figure 1).

The spur gear 2 has a plurality of spur teeth 4 that each has first surface 4A that faces in the first rotational direction and a second surface 4B that faces in the second rotational direction. Similarly, the pinion gear 3 has a plurality of pinion teeth 5 that each has a first surface 5A that faces in the first rotational direction and a second surface 5B that faces in the second rotational direction. The spur and pinion teeth 4, 5 engage so that the pinion gear 3 drives the spur gear 2.

When the motor is powered to drive the pinion gear 3, a surface 5A, 5B of one of the pinion teeth 5 will engage with a surface 4A, 4B of one of the spur teeth 4. For example, when the pinion gear 3 is driven by the motor in the second rotational direction (as shown in Figures 1 and 1A), the second surface 5B of one of the pinion teeth 5 will be urged against the second surface 4B of one of the spur teeth 4. Therefore, the second surface 5B of the pinion tooth 5 applies a force to the second surface 4B of the spur tooth 4, causing torque to be transferred to the spur gear 2 from the motor so that the spur gear 2 rotates in the first rotational direction.

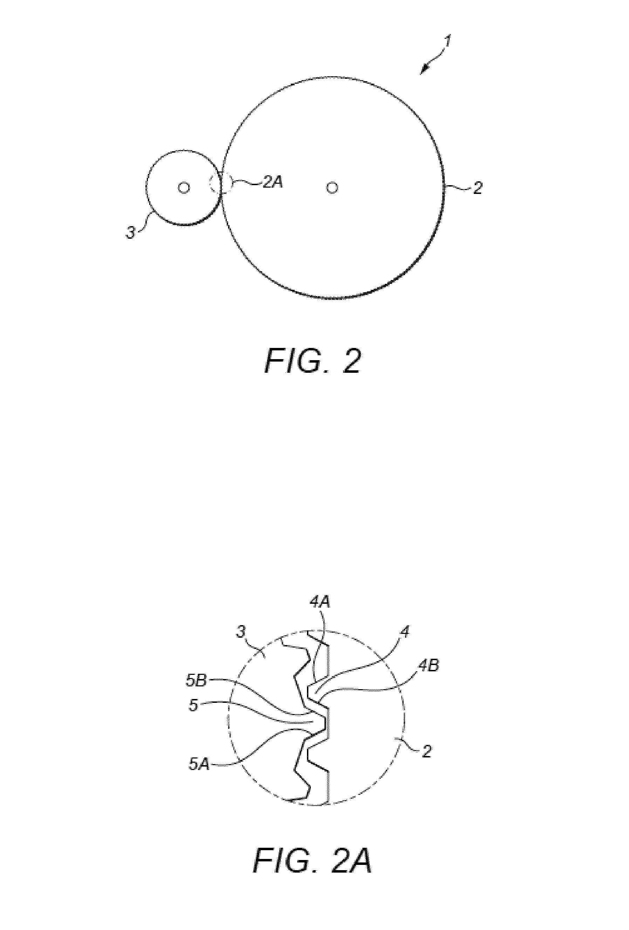

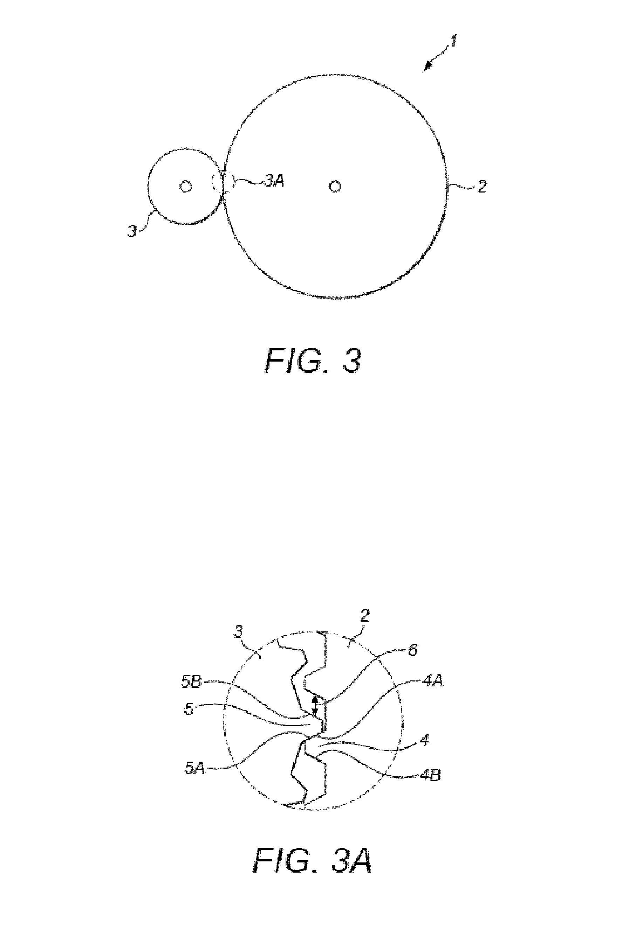

The rotational direction of the spur gear 2 may be reversed by reversing the direction of the pinion gear 3, which will result in the currently engaged pinion tooth 5 disengaging with the currently engaged spur tooth 4 and then engaging with an adjacent tooth 4 of the spur gear 2. For instance, if in the above example (shown in Figures 1 and 1A) the pinion gear 3 is then driven in the first rotational direction, the second surface 5B of the engaged pinion tooth 5 will move away from the second surface 4B of the engaged spur tooth 4 (as shown in Figures 2 and 2A). The pinion gear 3 will then rotate in the first rotational direction and the first surface 5A of the previously engaged pinion tooth 5 will engage with the first surface 4A of an adjacent spur tooth 5, exerting a force on the spur tooth 4 so that the spur gear 2 rotates in the second rotational direction (as shown in Figures 3 and 3A).

A gap 6 is provided between the engaged pinion tooth 5 and the nearest disengaged spur tooth 4. For instance, in the above example, when the pinion gear 3 rotates in the second rotational direction (as shown in Figures 1 and 1A) the gap 6 is formed between the first surface 5A of the engaged pinion tooth 5 and the first surface 4A of the adjacent disengaged spur tooth 4. Similarly, when the pinion gear 3 rotates in the first rotational direction (as shown in Figures 3 and 3A) the gap 6 is formed between the second surface 5B of the engaged pinion tooth 5 and the second surface 4B of the adjacent disengaged spur tooth 4. The gap 6 may be intentionally introduced between the gears 2, 3 to allow for lubrication to reach all parts of the surface of the gear teeth 4, 5. Alternatively, the gap between the gears 2, 3 may be an unavoidable consequence of manufacturing tolerances, thermal expansion, allowances, or deflection of the gears due to loading.

If an external torque is applied to the spur gear 2 in the same direction that the spur gear 2 is driven by the pinion gear 3, the currently engaged spur tooth 4 may become disengaged from the currently engaged pinion tooth 5 and freely rotate until said spur tooth 4 engages with an adjacent pinion tooth 5. The maximum angle that the pinion 3 can rotate by without the spur 2 due to the gap between the gears 2, 3 is known as 'play' or 'backlash'. The backlash between the gears 2, 3 can result in the gear system being unresponsive, as the spur gear 2 will not immediately rotate in response to a movement of the pinion gear 3 if the spur and pinion teeth 4, 5 are not engaged. Furthermore, the backlash can result in the precise rotational displacement of the spur gear 2 being unknown, which can introduce positional error into the system. Furthermore, the spur gear 2 may continue to rotate after the pinion gear 3 has stopped rotating due to inertial effects.

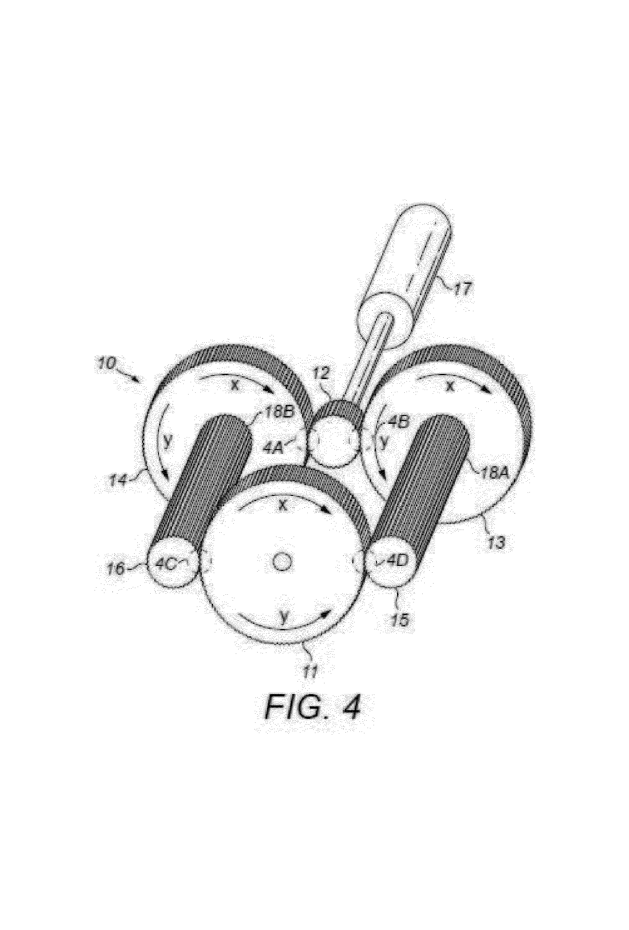

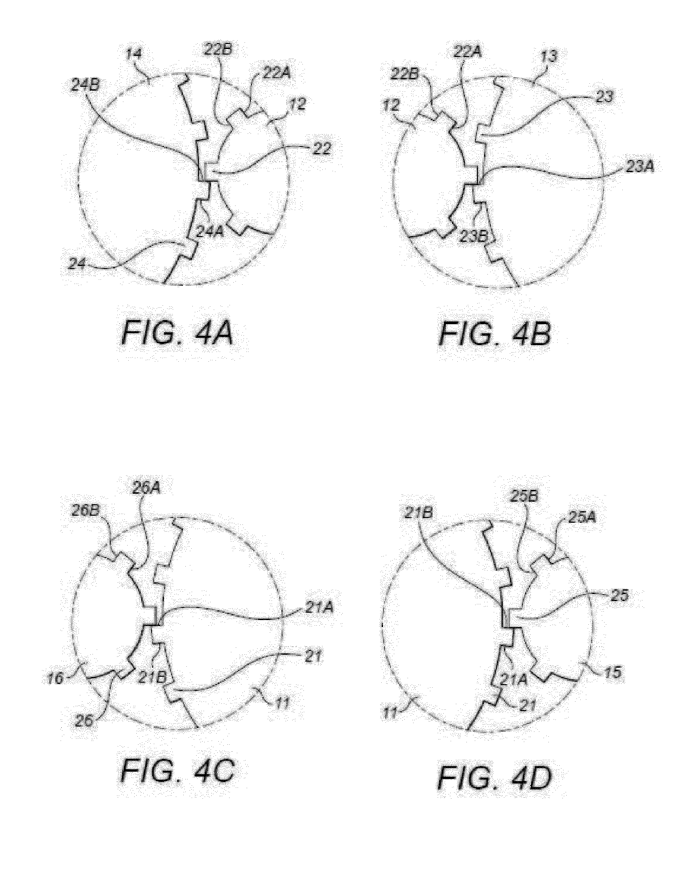

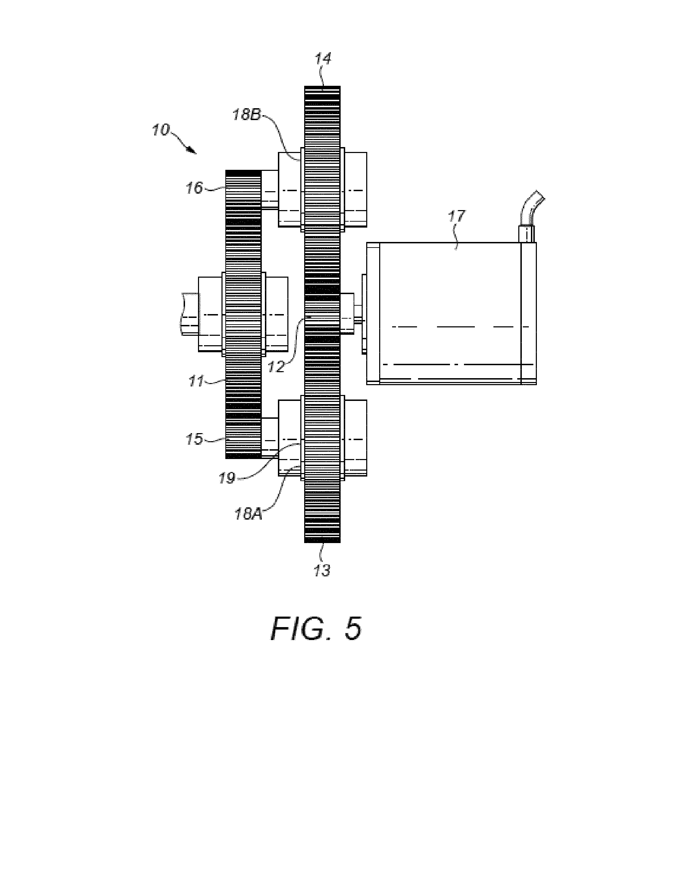

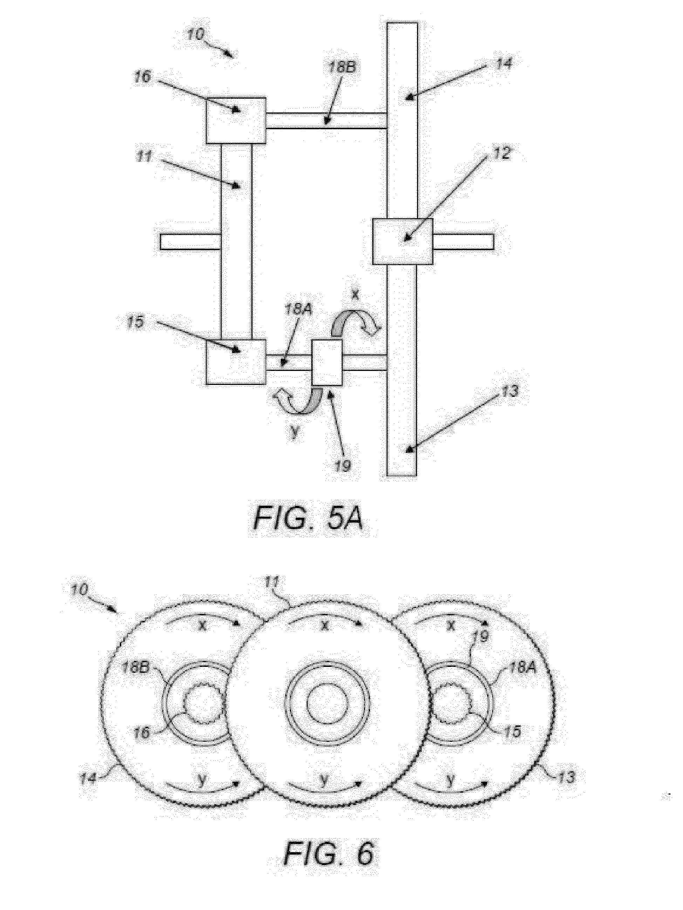

Referring to Figures 4 - 8, a gear assembly 10 of a first embodiment of the invention is shown and comprises a load gear 11, a drive gear 12, and first, second, third and fourth intermediate gears 13, 14, 15, 16. The load gear 11 is engaged with the drive gear 12 via the first and third intermediate gears 13, 15 and via second and fourth intermediate gears 14, 16. The load, drive and intermediate gears 11, 12, 13, 14, 15, 16 are rotatable in a first rotational direction (shown by arrow 'X' in Figure 4) and a second rotational direction (shown by arrow 'Y' in Figure 4). The load gear 11 is coupled to a load (not shown), for example, a load in a spacecraft application such as a deployable thermal radiator; an electronic propulsion system pointing mechanism; or, an antenna deployment/ pointing/ trimming mechanism, either directly connected or as part of a deployable boom structure. The drive gear 12 is coupled to a stepper motor 17 that is configured to rotate the load gear 11 in the first and second rotational directions by driving the drive gear 12 in the first and second rotational directions respectively.

The load gear 11 has a plurality of teeth 21 that each has a first surface 21A that faces in the first rotational direction and a second surface 21B that faces in the second rotational direction. Similarly, the drive gear 12 has a plurality of teeth 22 that each has a first surface 22A that faces in the first rotational direction and a second surface 22B that faces in the second rotational direction and the first, second, third and fourth intermediate gears 13, 14, 15, 16 each comprise a plurality of teeth 23, 24, 25, 26 that each has a first surface 23A, 24A, 25A, 26A that faces in the first rotational direction and a second surface 23B, 24B, 25B, 26B that faces in the second rotational direction.

The teeth 22 of the drive gear 12 engage with the teeth 23, 25 of the first and second intermediate gears 13, 14. Therefore, when the stepper motor 17 is powered to drive the drive gear 12, a surface 22A, 22B of one of the teeth 22 of the drive gear 12 will engage with an opposing surface 23A, 23B of one of the teeth 23 of the first intermediate gear 13 (as shown in Figure 4B) and a surface 22A, 22B of another of the teeth 22 of the drive gear 12 will engage with an opposing surface 24A, 24B of one of the teeth 24 of the second intermediate gear 14 (as shown in Figure 4A). For example, when the drive gear 12 is driven by the motor 17 in the second rotational direction, the second surface 22B of one of the teeth 22 of the drive gear 12 will be urged against the second surface 23B of one of the teeth 23 of the first intermediate gear 13 and the second surface 22B of another of the teeth 22 of the drive gear 12 will be urged against the second surface 24B of one of the teeth 24 of the second intermediate gear 14. Therefore, the second surfaces 22B of the teeth 22 of the drive gear 12 exert a force on the second surfaces 23B, 24B of the teeth 23, 24 of the first and second intermediate gears 13, 14, causing torque to be transferred from the motor 17 to the first and second intermediate gears 13, 14 so that they both rotate in the first rotational direction.

The third and fourth intermediate gears 15, 16 are coaxial with, and coupled to, the first and second intermediate gears 13, 14 respectively so that when the stepper motor 17 is powered to drive the first and second intermediate gear 13, 14 in a rotational direction the third and fourth intermediate gears 15, 16 rotate in the same rotational direction. For example, when the drive gear 12 is driven by the stepper motor 17 in the second rotational direction, the first and second intermediate gears 13, 14 will rotate in the first rotational direction, in the manner previously described, and the third and fourth intermediate gears 15, 16 will also rotate in the first rotational direction.

The teeth 21 of the load gear 11 engage with the teeth 25, 26 of the third and fourth intermediate gears 15, 16. Therefore, when the third and fourth intermediate gears 15, 16 rotate, a surface 25A, 25B of one of teeth 25 of the third intermediate gear 15 will engage with an opposing surface 21A, 21B of one of the teeth 21 of the load gear 11 (as shown in Figure 4D) and a surface 26A, 26B of one of the teeth 26 of the fourth intermediate gear 16 will engage with an opposing surface 21A, 21B of another of the teeth 21 of the load gear 11 (as shown in Figure 4C). For example, when the third and fourth intermediate gears 15, 16 are driven by the first and second intermediate gears 13, 14 respectively so that they rotate in the first rotational direction, the first surface 25A of one of the teeth 25 of the third intermediate gear 15 will be urged against the first surface 21A of a first tooth 21 of the load gear 11 and the first surface 26A of one of the teeth 26 of the fourth intermediate gear 14 will be urged against the first surface 21A of a second tooth 21 of the load gear 11. Therefore, the first surfaces 25A, 26A of the teeth 25, 26 of the third and fourth intermediate gears 15, 16 exert a force on the first surfaces 21A of the first and second teeth 21 respectively of the load gear 21, causing torque to be transferred from the motor 17, via the first and third intermediate gears 13, 15 and via the second and fourth intermediate gears 14, 16, to the load gear 11 so that the load gear 11 rotates in the second rotational direction.

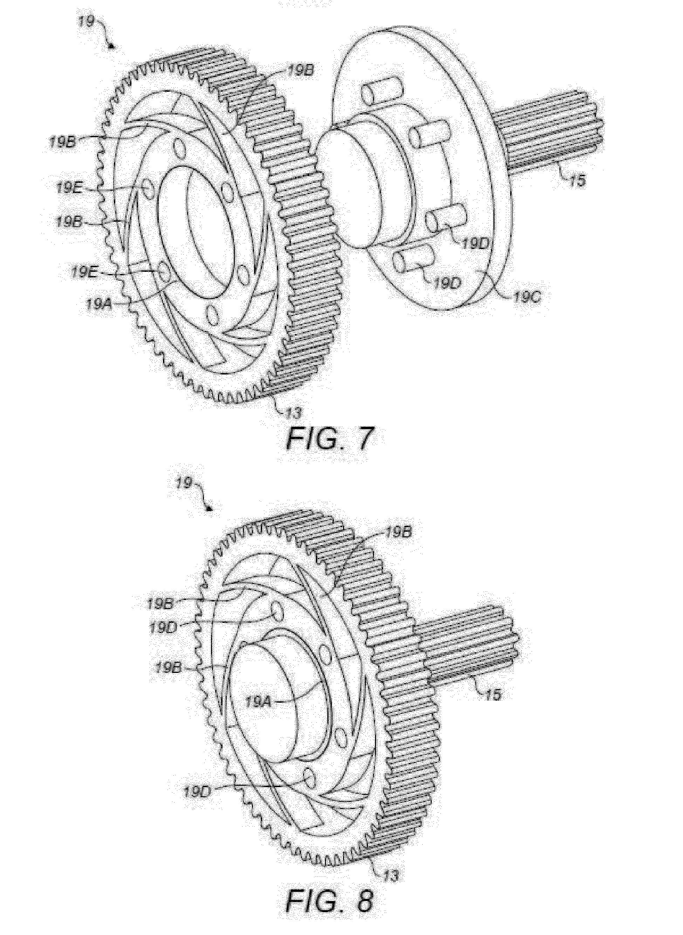

The first and third intermediate gears 13, 15 are coupled together by a first coupling 18A comprising a first biasing member 19 that is configured to bias the first intermediate gear 13 in the first rotational direction and the third intermediate gear 15 in the second rotational direction. The biasing member 19 (shown in Figures 7 and 8) comprises a rotatable hub 19A that is concentrically arranged within the first intermediate gear 13 and is rotatable relative thereto. The biasing member 19 comprises a plurality of spring elements 19B that each has a first end that is mounted to a radially outwardly facing peripheral surface of the rotatable hub 19A. The spring elements 19B each extend radially away from said peripheral surface of the rotatable hub 19A and each has a second end, distal to the first end, that is mounted to a radially inwardly facing surface of the first intermediate gear 13. The biasing member 19 further comprises a fixing element 19C that is mounted to the third intermediate gear 15 so that it is held in a fixed position therewith. The fixing element 19C comprises a plurality of cylindrical securing members 19D that are received within a plurality of bolt holes 19E in the rotatable hub 19A so that the fixing element 19C may be secured thereto. Each securing member 19D comprises a screw thread that engages with a nut (not shown) to fasten the fixing element 19C to the rotatable hub 19A.

Each spring element 19B comprises a curved portion of resilient material that is configured so that when the first intermediate gear 13 is rotated in the second rotational direction relative to the third intermediate gear 15, and thus the first intermediate gear 13 is rotated in the second rotational direction relative to the fixing element 19C and rotatable hub 19A, the first and second ends of each spring element 19B are urged away from each other so that each spring element 19B is straightened. As each spring element 19B is formed from a resilient material, each spring element 19B is urged back into its curved shape so that the first and second ends thereof are urged towards each other, and so the first intermediate gear 13 is urged to rotate in the first rotational direction relative to the rotatable hub 19A and the third intermediate gear 15 that is mounted thereto. Similarly, the third intermediate gear 15 is urged to rotate in the second rotational direction relative to the first intermediate gear 13. Therefore, the biasing member 19 is configured to provide a torque that biases the first intermediate gear 13 in the first rotational direction and the third intermediate gear 15 in the second rotational direction.

When assembled, the biasing member 19 is pre-loaded in torsion, with the first intermediate gear 13 positioned relative to the third intermediate gear 15 so that each spring element 19B being straightened from its curved shape, so that the biasing member 19 urges the first intermediate gear 13 in the first rotational direction. This results in the first intermediate gear 13 being urged to rotate so that the first surface 23A of a tooth 23 thereof is urged against the first surface 22A of a first tooth 22 of the drive gear 12 so that there is no gap therebetween. The drive gear 12 will then be urged to rotate in the second rotational direction by the force of the biasing member 19 urging said tooth 23 of the first intermediate gear 13 against the first tooth 22 of the drive gear 12, causing the drive gear 12 to rotate so that the second surface 22B of a second tooth 22 of the drive gear 12 is urged against the second surface 24B of a tooth 24 of the second intermediate gear 14 so that there is no gap therebetween. The biasing force of the pre-loaded biasing member 19 also urges the third intermediate gear 15 in the second rotational direction, causing the third intermediate gear 15 to be urged to rotate so that the second surface 25B of a tooth 25 of the third intermediate gear 15 is urged against the second surface 21B of a first tooth 21 of the load gear 11 so that there is no gap therebetween. The load gear 11 will then be urged to rotate in the first rotational direction by the force of the biasing member 19 urging said tooth 25 of the third intermediate gear 15 against the first tooth 21 of the load gear 11, causing the load gear 11 to rotate so that the first surface 21A of a second tooth 21 of the load gear 11 is urged against the first surface 26A of a tooth 26 of the fourth intermediate gear 16 so that there is no gap therebetween.

The second and fourth intermediate gears 14, 16 are coupled together by a second coupling 18B so that they are held in a fixed position relative to each other. Therefore, the force of the biasing member 19 urging a tooth 22 of the drive gear 12 against a tooth 24 of the second intermediate gear 14 to bias the second intermediate gear 14 in the first rotational direction is transferred to the fourth intermediate gear 16 so that it is also urged in the first rotational direction. Similarly, the force of the biasing member 19 urging a tooth 21 of the load gear 11 against a tooth 26 of the fourth intermediate gear 16 to bias the fourth intermediate gear 16 in the second rotational direction is transferred to the second intermediate gear 14 so that it is also urged in the second rotational direction. Thus, the biasing member 19 exerts an equal and opposing torque on each gear 11, 12, 13, 14, 15, 16 and so, when each gear is engaged so that there is no gap formed between the teeth 21, 22, 23, 24, 25, 26 of engaging gears, the net force exerted on each gear by the biasing member 19 is zero. Therefore, the stepper motor 17 does not have to drive the load gear 11 against a net force exerted by the biasing member 19 and so the biasing member 19 does not add any substantial additional loading on the motor 17.

In use, when the motor 17 is powered to drive the drive gear 12 in the first rotational direction, the tooth 22 of the drive gear 12 that is urged against a tooth 23 of the first intermediate gear 13 by the biasing member 19 will exert a force on said tooth 23 of the first intermediate gear 13 to drive the first intermediate gear 13 in the second rotational direction so that the third intermediate gear 15 that is coupled thereto by the biasing member 19 is also driven in the second rotational direction. This will cause the tooth 25 of the third intermediate gear 15 that is urged against a tooth 21 of the load gear 11 to exert a force on said tooth 21 of the load gear 11 to drive the load gear 11 in the first rotational direction. Similarly, when the motor 17 is driven to drive the drive gear 12 in the second rotational direction, the tooth 22 of the drive gear 12 that is urged against a tooth 24 of the second intermediate gear 24 by the biasing member 19 will exert a force on said tooth 24 of the second intermediate gear 14 to drive the second intermediate gear 14 in the first rotational direction so that the fourth intermediate gear 16 that is coupled thereto is also driven in the first rotational direction. This will cause the tooth 26 of the fourth intermediate gear 16 that is urged against a tooth 21 of the load gear 11 to exert a force on said tooth 21 of the load gear 11 to drive the load gear 11 in the second rotational direction. As the teeth 21, 22, 23, 24, 25, 26 of engaging gears 11, 12, 13, 14, 15, 16 are urged against each other so that no gap formed therebetween a torque can more instantaneously be applied to the load gear 11 by the motor 17, without the gears having to first rotate to remove gaps between engaging teeth, and so the load gear 11 is more responsive to movement of the drive gear 12, therefore alleviating the effects of backlash.

The stepper motor 17 is rotatable to drive the drive gear 12 between a plurality of holding positions, in which a holding torque of the stepper motor 17 holds the drive gear 12 in position. When the stepper motor 17 is in a holding position, the load gear 11 is prevented from rotating under the force of external forces, which could otherwise result in the teeth 25, 26 of the third and fourth intermediate gears 15, 16 becoming disengaged from the corresponding teeth 21 of the load gear 11 and the rotational position of the load gear 11 becoming unknown. For example, if an external force is exerted on the load gear 11 that urges the load gear 11 in the first rotational direction, the currently engaged tooth 21 of the load gear 11 will be urged against the currently engaged tooth 26 of the fourth intermediate gear 16, causing the second and fourth intermediate gears 14, 16 to be urged in the second rotational direction. However, when the second intermediate gear 14 is urged in the second rotational direction a tooth 24 thereof will be urged against a tooth 22 of the drive gear 12, and the drive gear 12 is prevented from rotating due to the holding torque exerted on it by the stepper motor 17. Therefore, the load gear 11 will only rotate if the external force is sufficient to overcome the holding torque of the stepper motor 17 and so the load gear 11 has a 'hard' rotational stiffness in the first rotational direction. Similarly, if an external force is exerted on the load gear that urges the load gear 11 in the second rotational direction, the currently engaged tooth 21 of the load gear 11 will be urged against the currently engaged tooth 25 of the third intermediate gear 15, causing the first and third intermediate gears 13, 15 to be urged in the first rotational direction. However, when the first intermediate gear 13 is urged in the first rotational direction a tooth 23 thereof will be urged against a tooth 22 of the drive gear 12, and the drive gear 12 is prevented from rotating due to the holding torque exerted on it by the stepper motor 17. Therefore, the load gear 11 will only rotate if the external force is sufficient to overcome the biasing force of the biasing member 19 and so the load gear 11 has a 'soft' torsional stiffness in the second rotational direction. Furthermore, even when the stepper motor 17 is unpowered so that no holding torque is exerted on the drive gear 12, the stepper motor 17 will exert a detent torque on the drive gear 12, due to the magnetic attraction between the rotor and stator of the motor 17, and so the drive gear 12, and thus the load gear 11, will still be prevented from rotating under the force of external loads or inertial effects. It should be noted that the torque required to rotate the load gear 11 when the drive gear 12 is held in position is proportional to the gear ratio between the drive gear 12 and the load gear 11. For example, if the gear ratio between the drive gear 12 and the load gear 11 is 6:1, such that the drive gear 12 rotates six times for every rotation of the load gear 11, then to overcome the holding/ detent torque of the stepper motor 17 to rotate the load gear 11 an external torque would need to be applied to the load gear 11 that is six times larger than the holding/detent torque of the stepper motor 17.

Although in the above described embodiment the motor 17 is a stepper motor, in alternate embodiments other types of motor may be used. For example, an induction motor, synchronous motor or servo motor may be used to drive the drive gear. In such embodiments, the drive gear 12 may be held in position, to prevent rotation of the load gear 11 under the force of external loads or inertial effects, using a retardation device that is coupled to the drive gear 12 or the motor 17. Examples of suitable retardation devices include a friction brake or an eddy-current brake.

Although in the above described embodiment the biasing member 19 comprises one or more spring elements 19C that are curved, in an alternate embodiment (not shown) the spring elements are straight and the biasing force is provided by the tension/compression in the resilient material of each spring element 19C as it is deformed due to the first and second ends thereof moving away from/towards each other as the first and third intermediate gears 13, 15 are rotated relative to each other. In another embodiment, the spring elements are straight and are deformed into a curved shape when the first and third intermediate gears 13, 15 are rotated relative to each other. In such an embodiment, the resilience of the spring elements will urge them back into their straight shape, which will urge the first and third intermediate gears 13, 15 to rotate relative to each other to provide a biasing force. In yet another embodiment, the spring element 19C comprises a spiral shaped member that is wound round the peripheral wall of the rotatable hub 19A and has a first end mounted thereto and a second end mounted to the peripheral wall of the first intermediate gear 13. In another embodiment, the biasing member 19 is replaced by an alternate biasing member comprising a torsion spring that couples the first intermediate gear 13 to the third intermediate gear 15 and is configured to bias the first and third intermediate gears 13, 15 in the first and second rotational directions respectively relative to each other. In a further embodiment, the biasing member 19 comprises a shaft that couples the first and third intermediate gears 13, 15 and is pre-loaded under tension when the gear assembly is assembled, by rotating the first intermediate gear 13 in the first rotational direction relative to the third intermediate gear 15 so that the shaft is twisted prior to the first and third intermediate gears 13, 15 being meshed with the drive and load gears 12, 11 respectively, to provide the biasing force to urge the teeth 21, 22, 23, 24, 25, 26 of engaging gears 11, 12, 13, 14, 15, 16 against each other to reduce the effects of backlash.

In the above described embodiment the spring elements 19C are mounted to the rotatable hub 19A and first intermediate gear 13 using an adhesive. In an alternate embodiment (not shown), the spring elements 19C are integrally formed with the rotatable hub 19A and/or the first intermediate gear 13.

Although in the above described embodiment the second coupling 18B holds the second and fourth intermediate gears 14, 16 in a fixed position relative to each other, in an alternate embodiment (not shown) the second coupling comprises a second biasing member that is configured to bias the second intermediate gear 14 in the second rotational direction and the fourth intermediate gear 16 in the first rotational direction. As described with reference to the first embodiment of the invention, when assembled, the biasing member 19 is pre-loaded in torsion so that the biasing member 19 urges the first intermediate gear 13 in the first rotational direction. This results in the first intermediate gear 13 being urged to rotate so that the first surface 23A of a tooth 23 thereof is urged against the first surface 22A of a first tooth 22 of the drive gear 12 so that there is no gap therebetween. The drive gear 12 will then be urged to rotate in the second rotational direction by the force of the biasing member 19 urging said tooth 23 of the first intermediate gear 13 against the first tooth 22 of the drive gear 12, causing the drive gear 12 to rotate so that the second surface 22B of a second tooth 22 of the drive gear 12 is urged against the second surface 24B of a tooth 24 of the second intermediate gear 14 so that there is no gap therebetween. The biasing force of the pre-loaded biasing member 19 also urges the third intermediate gear 15 in the second rotational direction, causing the third intermediate gear 15 to be urged to rotate so that the second surface 25B of a tooth 25 of the third intermediate gear 15 is urged against the second surface 2iB of a first tooth 21 of the load gear 11 so that there is no gap therebetween. The load gear 11 will then be urged to rotate in the first rotational direction by the force of the biasing member 19 urging said tooth 25 of the third intermediate gear 15 against the first tooth 21 of the load gear 11, causing the load gear 11 to rotate so that the first surface 21A of a second tooth 21 of the load gear 11 is urged against the first surface 26A of a tooth 26 of the fourth intermediate gear 16 so that there is no gap therebetween.

Additionally, when the gear assembly 10 is assembled, the second biasing member is pre-loaded in torsion so that the second biasing member urges the second intermediate gear 14 in the second rotational direction. This results in the second intermediate gear 14 being biased so that the second surface 24B of a tooth 24 thereof is urged against the second surface 22B of the second tooth 22 of the drive gear 12. This causes the drive gear 12 to be urged in the first rotational direction by the force of the second biasing member urging said tooth 24 of the second intermediate gear 14 against the second tooth 22 of the drive gear 12, causing the first tooth 22 of the drive gear 12 to be urged against the first surface 24A of a tooth 23 of the first intermediate gear 13. The biasing force of the pre-loaded second biasing member also urges the fourth intermediate gear 16 in the first rotational direction, causing the first surface 26A of a tooth 26 of the fourth intermediate gear 16 to be urged against the first surface 21A of the second tooth 21 of the load gear 11. The load gear 11 will then be urged in the second rotational direction by the force of the second biasing member urging said tooth 26 of the fourth intermediate gear 16 against the second tooth 21 of the load gear 11, causing the second surface 21B of the first tooth 21 of the load gear 11 to be urged against the second surface 25B of a tooth 25 of the third intermediate gear 15. As the teeth 21, 22, 23, 24, 25, 26 of engaging gears 11, 12, 13, 14, 15, 16 are urged against each other so that no gap formed therebetween a torque can more instantaneously be applied to the load gear 11 by the motor 17, without the gears having to first rotate to remove gaps between engaging teeth, and so the load gear 11 is more responsive to movement of the drive gear 12, therefore alleviating the effects of backlash.

As described with reference to the first embodiment, when the drive gear is prevented from rotating, for example, due to the holding torque of a stepper motor holding the drive gear in position, then the load gear 11 is prevented from rotating under the force of external forces or inertial effects, which could otherwise result in the teeth 25, 26 of the third and fourth intermediate gears 15, 16 becoming disengaged from the corresponding teeth 21 of the load gear 11 and the rotational position of the load gear 11 becoming unknown. For example, if an external force is exerted on the load gear that urges the load gear 11 in the second rotational direction, the currently engaged tooth 21 of the load gear 11 will be urged against the currently engaged tooth 25 of the third intermediate gear 15, causing the first and third intermediate gears 13, 15 to be urged in the first rotational direction. However, when the first intermediate gear 13 is urged in the first rotational direction a tooth 23 thereof will be urged against a tooth 22 of the drive gear 12, and the drive gear 12 is prevented from rotating due to the holding torque exerted on it by the stepper motor 17. Therefore, the load gear 11 will only rotate if the external force is sufficient to overcome the biasing force of the biasing member 19 and so the load gear 11 has a 'soft' torsional stiffness in the second rotational direction. Similarly, if an external force is exerted on the load gear 11 that urges the load gear 11 in the first rotational direction, the currently engaged tooth 21 of the load gear 11 will be urged against the currently engaged tooth 26 of the fourth intermediate gear 16, causing the second and fourth intermediate gears 14, 16 to be urged in the second rotational direction. However, when the second intermediate gear 14 is urged in the second rotational direction a tooth 24 thereof will be urged against a tooth 22 of the drive gear 12, and the drive gear 12 is prevented from rotating due to the holding torque exerted on it by the stepper motor 17. Therefore, the load gear 11 will only rotate if the external force is sufficient to overcome the biasing force of the second biasing member and so the load gear 11 also has a 'soft' rotational stiffness in the first rotational direction.

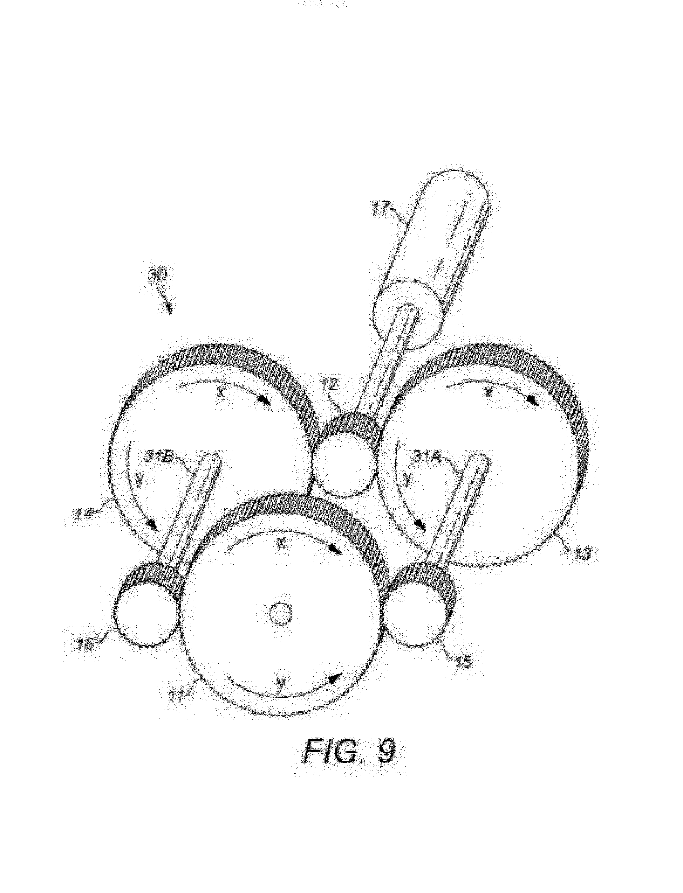

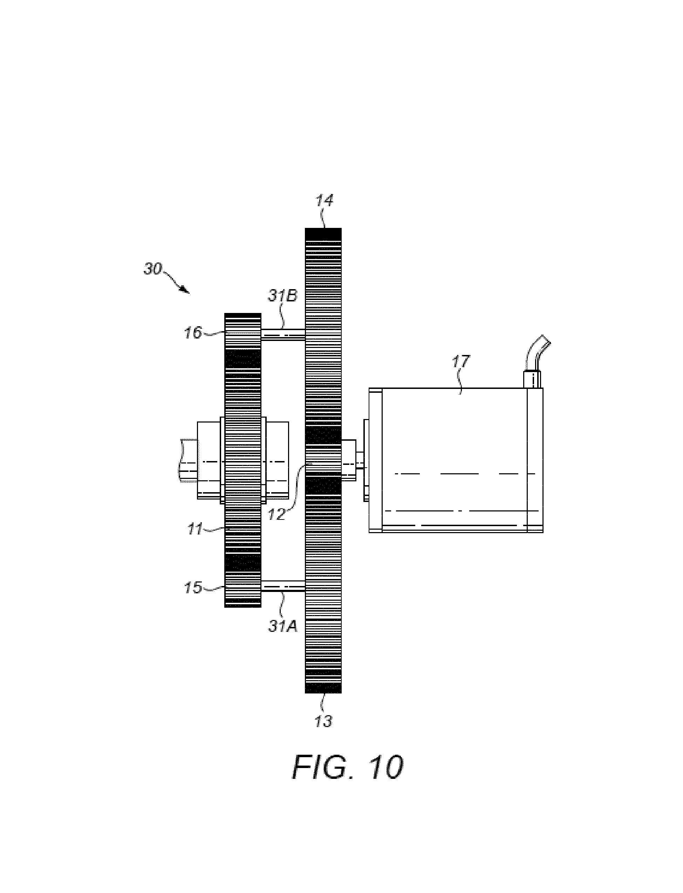

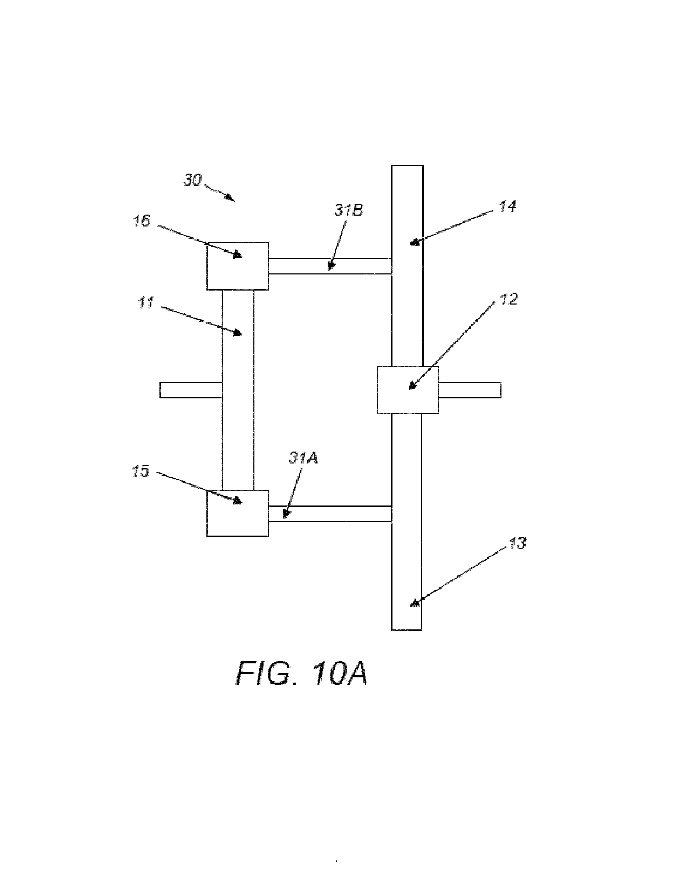

Referring to Figures 9 and 10, a gear assembly 30 of a second embodiment of the invention is shown and is similar to the first embodiment of the invention, with like features retaining the same reference numerals. A difference between the first and second embodiments is that the first and second couplings 18A, 18B of the first embodiment are omitted and are replaced by alternate first and second couplings 31A, 31B. The first and second couplings 31A, 31B of the second embodiment comprise first and second rigid shafts 31A, 31B respectively. The first rigid shaft 31A couples the first and third intermediate gears 13,15 so that they are held in a fixed rotational position relative to each other. The second rigid shaft 31B couples the second and fourth intermediate gears 14, 16 so that they are held in a fixed rotational position relative to each other.

When the gear assembly 30 of the second embodiment is assembled, the first intermediate gear 13 is positioned so that the first surface 23A of a tooth 23 thereof is positioned against the first surface 22A of a first tooth 22 of the drive gear 12 so that there is no gap therebetween. The load gear 11 is then rotated so that the first surface 25A of a tooth 25 of the third intermediate gear 15, which is held in a fixed position relative to the first intermediate gear 13, is positioned against the first surface 21A of a first tooth 21 of the load gear 11 so that there is no gap therebetween. The second surface 24B of a tooth 24 of the second intermediate gear 14 is then positioned against the second surface 22B of a second tooth 22 of the drive gear 12 so that there is no gap formed therebetween and, simultaneously, the second surface 26B of a tooth 26 of the fourth intermediate gear 16, which is held in a fixed position relative to the second intermediate gear 16, is positioned against the second surface 21B of a second tooth 21 of the load gear 11 so that there is no gap formed therebetween.

In use, when the drive gear 12 is held in a fixed position, for example, by the detent or holding torque of a stepper motor 17, the load gear 11 is prevented from rotating under the force of external forces or inertial effects and so the effects of backlash are reduced. For example, if an external force is exerted on the load gear 11 to urge the load gear 11 in a first rotational direction (shown by arrow 'X' in Figure 9) then the first surface 21A of the first tooth 21 of the load gear 11, which is biased against the first surface 25A of a tooth 25 of the third intermediate gear 15 by the first rigid shaft 31A, will urge the third intermediate gear 15 to rotate in a second rotational direction (shown by arrow 'Y' in Figure 9). However, the third intermediate gear 15 is held in a fixed position relative to the first intermediate gear 13, and the first intermediate gear 13 is prevented from rotating in the second rotational direction as the first surface 23A of a tooth 23 thereof is biased by the first rigid shaft 31A against the first surface 22A of the first tooth 22 of the drive gear 12, which is held in a fixed position. Therefore, the load gear 11 is prevented from rotating in the first rotational direction. Similarly, if an external force is exerted on the load gear 11 to urge the load gear 11 in the second rotational direction then the second surface 21B of the second tooth 21 of the load gear 11, which is biased against the second surface 26B of a tooth 26 of the fourth intermediate gear 16 by the second rigid shaft 31B, will urge the fourth intermediate gear 16 to rotate in the first rotational direction. However, the fourth intermediate gear 16 is held in a fixed position relative to the second intermediate gear 14, and the second intermediate gear 14 is prevented from rotating in the first rotational direction as the second surface 24B of a tooth 24 thereof is biased by the second rigid shaft 31B against the second surface 22B of the second tooth 22 of the drive gear 12, which is held in a fixed position. Therefore, the load gear 11 is prevented from rotating in the second rotational direction.

As the teeth 21, 22, 23, 24, 25, 26 of engaging gears 11, 12, 13, 14, 15, 16 are urged against each other so that no gap formed therebetween a torque can more instantaneously be applied to the load gear 11 by the motor 17, without the gears having to first rotate to remove gaps between engaging teeth, and so the load gear 11 is more responsive to movement of the drive gear 12, therefore alleviating the effects of backlash.

In the above described embodiment the first and second rigid shafts 31A, 31B are not pre-loaded under tension when the gear assembly 30 has been assembled, and instead the first and second rigid shafts 31A, 31B are configured to bias the teeth 21, 22, 23, 24, 25, 26 of engaging gears 11, 12, 13, 14, 15, 16 against each other by carefully aligning the gears 11, 12, 13, 14, 15, 16 during assembly. In an alternate embodiments, one or both of the first and second rigid shafts 31A, 31B may be omitted and replaced by first and /or second shafts that are manufactured from material having some resilience. In one such embodiment, the resilient first and second shafts are pre-loaded under torsion in a similar manner to the biasing member and second biasing member described in relation to the first embodiment of the invention. The pre-loaded tension of the first and second couplings 31A, 31B is configured to adjust the rotational position of the first and second intermediate gears 13, 14 relative to the third and fourth intermediate gears 15, 16 respectively to compensate for fluctuations in gear tooth 21, 22, 23, 24, 25, 26 size due to wear or manufacturing imperfections so that the teeth 21, 22, 23, 24, 25, 26 of engaging gears 11, 12, 13, 14, 15, 16 are still urged against each other.

Although in the above described embodiment the first coupling 31A comprises a first rigid shaft 31A, in an alternate embodiment (not shown) the first rigid shafts 31A is omitted and instead the first intermediate gear 13 is coupled directly to the third intermediate gear 15. In another embodiment, the second rigid shaft 31B of the second coupling 31B is omitted and instead the second intermediate gear 14 is coupled directly to the fourth intermediate gear 16.

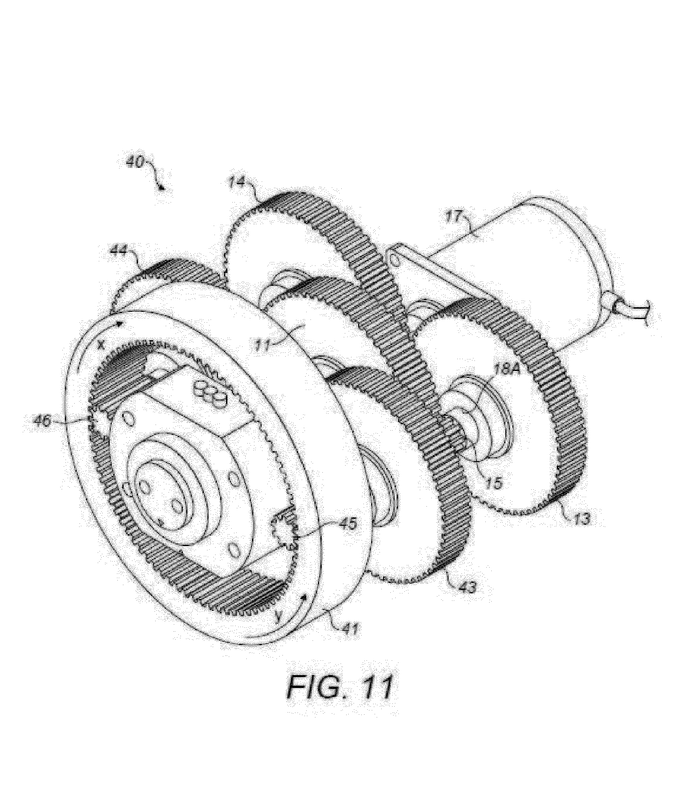

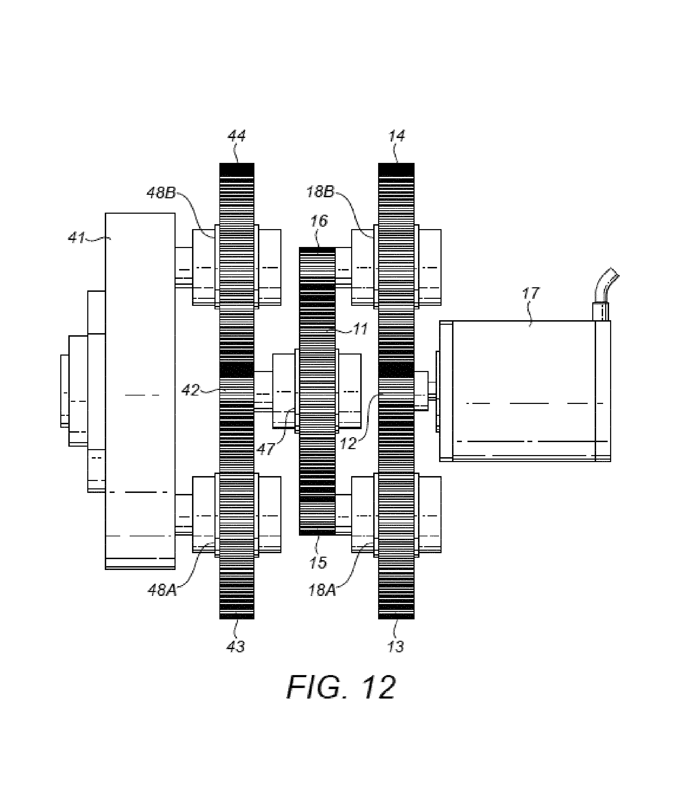

Referring to Figures 11 and 12, a gear assembly 40 of a third embodiment of the invention is shown and is similar to the first embodiment of the invention, with like features retaining the same reference numerals. As with the first embodiment of the invention, the gear assembly 40 of the third embodiment comprises a load gear 11, a drive gear 12, and first, second, third and fourth intermediate gears 13, 14, 15, 16. The load gear 11 is engaged with the drive gear 12 via the first and third intermediate gears 13, 15 and via the second and fourth intermediate gears 14, 16. The load, drive and intermediate gears 11, 12, 13, 14, 15, 16 are rotatable in a first rotational direction (shown by arrow 'X' in Figure 11) and a second rotational direction (shown by arrow 'Y' in Figure 11). The drive gear 12 is coupled to a stepper motor 17 that is configured to rotate the load gear 11 in the first and second rotational directions by driving the drive gear 12 in the first and second rotational directions respectively. The first and third intermediate gears 13, 15 are coupled together by a first coupling 18A and the second and fourth intermediate gears 14, 16 are coupled together by a second coupling 18B. The first coupling 18A comprises a biasing member (not shown) that is configured to urge the teeth 21, 22, 23, 24, 25, 26 of engaging gears 11, 12, 13, 14, 15, 16 against each other so that no gap formed therebetween, in a similar manner to that described in reference to the first embodiment of the invention, thereby alleviating the effects of backlash.

The gear assembly 40 of the third embodiment of the invention further comprises a second load gear 41, a second drive gear 42, and fifth, sixth, seventh and eighth intermediate gears 43, 44, 45, 46. The second load gear 41 is engaged with the second drive gear 42 via the fifth and seventh intermediate gears 43, 45 and via the sixth and eighth intermediate gears 44, 46. The second load, second drive and intermediate gears 41, 42, 43, 44, 45, 46 are rotatable in the first and second rotational directions.

The load gear 11 is coupled to the second drive gear 42 so that it is held in a fixed position therewith. Therefore, when the stepper motor 17 is powered to drive the load gear 11 in a rotational direction, the second drive gear 42 is also rotated in said rotational direction.

The second load, second drive, and intermediate gears 41, 42, 43, 44, 45, 46 each have a plurality of teeth (not shown) that each have a first surface that faces in the first rotational direction and a second surface that faces in the second rotational direction.

The teeth of the second drive gear 42 engage with the teeth of the fifth and sixth intermediate gears 43, 44. Therefore, when the stepper motor 17 is powered to rotate the drive gear 12, causing the load gear 11 to urge the second drive gear 42 to rotate, a surface of one of the teeth of the second drive gear 42 will engage with an opposing surface of one of the teeth of the fifth intermediate gear 43 to urge the fifth intermediate gar 43 to rotate and a surface of another of the teeth of the drive gear 42 will engage with an opposing surface of one of the teeth of the sixth intermediate gear 44 to urge the sixth intermediate gear 44 to rotate. The seventh and eighth intermediate gears 45, 46 are coaxial with, and coupled to, the fifth and sixth intermediate gears 43, 44 respectively so that when the stepper motor 17 is powered to urge the fifth and sixth intermediate gear 43, 44 to rotate in a rotational direction the seventh and eighth intermediate gears 45, 46 rotate in the same rotational direction. The teeth of the second load gear 41 engage with the teeth of the seventh and eighth intermediate gears 45, 46. Therefore, when the seventh and eight intermediate gears 45, 46 are urged by the stepper motor 17 to rotate, a surface of one of the teeth of the seventh intermediate gear 45 will engage with an opposing surface of a first tooth of the second load gear 41 and a surface of one of the teeth of the eighth intermediate gear 46 will engage with an opposing surface of a second tooth of the second load gear 41 to urge the second load gear 41 to rotate.

The fifth and seventh intermediate gears 43, 45 are coupled together by a third coupling 48A comprising a second biasing member (not shown) that is configured to bias the fifth intermediate gear 43 in the first rotational direction and the seventh intermediate gear 45 in the second rotational direction.

When the gear assembly 40 is assembled, the second biasing member is pre-loaded in torsion, so that the second biasing member urges the fifth intermediate gear 43 in the first rotational direction. This results in the fifth intermediate gear 43 being urged to rotate so that the first surface of a tooth thereof is urged against the first surface of a first tooth of the second drive gear 42 so that there is no gap therebetween. The second drive gear 42 will then be urged to rotate in the second rotational direction by the force of the second biasing member urging said tooth of the fifth intermediate gear 43 against the first tooth of the second drive gear 42, causing the second drive gear 42 to rotate so that the second surface of a second tooth of the second drive gear 42 is urged against the second surface of a tooth of the sixth intermediate gear 44 so that there is no gap therebetween. The biasing force of the pre-loaded second biasing member also urges the seventh intermediate gear 45 in the second rotational direction, causing the seventh intermediate gear 45 to be urged to rotate so that the second surface of a tooth of the seventh intermediate gear 45 is urged against the second surface of a first tooth of the load gear 41 so that there is no gap therebetween. The second load gear 41 will then be urged to rotate in the first rotational direction by the force of the second biasing member urging said tooth of the seventh intermediate gear 45 against the first tooth of the second load gear 41, causing the second load gear 41 to rotate so that the first surface of a second tooth of the second load gear 41 is urged against the first surface of a tooth of the eighth intermediate gear 46 so that there is no gap therebetween.

The sixth and eighth intermediate gears 44, 46 are coupled together by a fourth coupling 48B so that they are held in a fixed position relative to each other. Therefore, the force of the second biasing member urging a tooth of the second drive gear 42 against a tooth of the sixth intermediate gear 16 to bias the sixth intermediate gear 16 in the first rotational direction is transferred to the eighth intermediate gear 46 so that it is also urged in the first rotational direction. Similarly, the force of the second biasing member urging a tooth of the second load gear 41 against a tooth of the eighth intermediate gear 46 to bias the eighth intermediate gear 46 in the second rotational direction is transferred to the sixth intermediate gear 44 so that it is also urged in the second rotational direction. Thus, the second biasing member exerts an equal and opposing torque on each gear 41, 42, 43, 44, 45, 46 and so, when each gear is engaged so that there is no gap formed between the teeth of engaging gears, the net force exerted on each gear by the second biasing member is zero. Therefore, the stepper motor 17 does not have to drive the second load gear 41 against a net force exerted by the second biasing member and so the second biasing member does not add any substantial additional loading on the motor 17.

In use, when the motor 17 is powered to drive the drive gear 12 in the first rotational direction to rotate the second drive gear 42 in the first rotational direction, the tooth of the second drive gear 42 that is urged against a tooth of the fifth intermediate gear 43 by the second biasing member will exert a force on said tooth of the fifth intermediate gear 43 to drive the fifth intermediate gear 43 in the second rotational direction so that the seventh intermediate gear 45 that is coupled thereto by the second biasing member is also driven in the second rotational direction. This will cause the tooth of the seventh intermediate gear 45 that is urged against a tooth of the second load gear 41 to exert a force on said tooth of the second load gear 41 to drive the second load gear 41 in the first rotational direction. Similarly, when the motor 17 is driven to drive the drive gear 12 in the second rotational direction to rotate second drive gear 42 in the second rotational direction, the tooth of the second drive gear 42 that is urged against a tooth of the sixth intermediate gear 44 by the second biasing member will exert a force on said tooth of the sixth intermediate gear 44 to drive the sixth intermediate gear 44 in the first rotational direction so that the eighth intermediate gear 46 that is coupled thereto is also driven in the first rotational direction. This will cause the tooth of the eighth intermediate gear 46 that is urged against a tooth of the second load gear 41 to exert a force on said tooth of the second load gear 41 to drive the second load gear 41 in the second rotational direction. As the teeth of the engaging gears 41, 42, 43, 44, 45, 46 are urged against each other so that no gap formed therebetween a torque can more instantaneously be applied to the second load gear 41 by the motor 17, without the gears having to first rotate to remove gaps between engaging teeth, and so the second load gear 41 is more responsive to movement of the drive gear 12, therefore alleviating the effects of backlash. The increased number of gears the third embodiment of the invention, compared to the first and second embodiments, allows for a higher gear ratio between the drive gear 12 and second load gear 41, without introducing backlash into the system.

## Claims

1. A gear assembly comprising an input drive gear in meshing engagement with first and second intermediate gears, an output load gear in meshing engagement with third and fourth intermediate gears, a first coupling between the first and third intermediate gears configured so that rotation of the first intermediate gear causes rotation of the third intermediate gear, and a second coupling between the second and fourth intermediate gears configured so that rotation of the second intermediate gear causes rotation of the fourth intermediate gear.

2. A gear assembly according to claim 1, wherein the gears each comprise a plurality of teeth, and wherein a tooth of each of the first and second intermediate gears abut first and second teeth of the input drive gear respectively and a tooth of each of the third and fourth intermediate gears abut first and second teeth of the output load gear respectively.

3. A gear assembly according to claim 2, wherein each tooth of the input drive gear comprises a first portion facing generally in a first rotational direction and a second portion facing generally in a second rotational direction opposite the first rotational direction, and wherein the first portion of a tooth of the input drive gear abuts a tooth of the first intermediate gear and the second portion of a tooth of the input drive gear abuts a tooth of the second intermediate gear for all rotational positions of the input drive gear.

4. A gear assembly according to any of claims 1 to 3, wherein the first coupling is configured so that a torsional force exists between the first and third intermediate gears such that the first intermediate gear acts to exert a torque on the input drive gear in a first rotational direction and the third intermediate gear acts, through the load, fourth and second intermediate gears, to exert a torque on the input drive gear in a second rotational direction opposite the first rotational direction.

5. A gear assembly according to claim 4, wherein said torsional force between the first and third intermediate gears is present when the input drive gear is stationary.

6. A gear assembly according to claim 4 or claim 5, wherein said torsional force between the first and third intermediate gears is provided by a torsional spring element.

7. A gear assembly according to claim 6, comprising a rotatable hub that is rigidly coupled to one of the first and third intermediate gears and is rotatably coupled to the other of the first and third intermediate gears and is rotatably biased relative thereto by the torsional spring element.

8. A gear assembly according to claim 7, wherein the other of the first and third intermediate gears comprises a radially inwardly facing surface and a first end of the torsional spring element is mounted to said radially inwardly facing surface, and wherein the rotatable hub comprises a radially outwardly facing surface and a second end of the torsional spring element is mounted to said radially outwardly facing surface.

9. A gear assembly according to claim 7 or claim 8, wherein the rotatable hub is disposed within the other of the first and third intermediate gears and is concentrically arranged therewith.

10. A gear assembly according to claim 4 or claim 5, wherein the first coupling comprises a shaft that is pre-loaded under torsion to provide said torsional force between the first and third intermediate gears.

11. A gear assembly according to any of claims 1 to 3, wherein the first coupling is configured such that the first intermediate gear is held in a fixed rotational position relative to the third intermediate gear.

12. A gear assembly according to any of claims 4 to 10, wherein the second coupling is configured so that a torsional force exists between the second and fourth intermediate gears such that the second intermediate gear acts to exert a torque on the input drive gear in the second rotational direction and the fourth intermediate gear acts, through the load, third and first intermediate gears, to exert a torque on the input drive gear in the first rotational direction.

13. A gear assembly according to claim 12, wherein said torsional force between the second and fourth intermediate gears is present when the input drive gear is stationary.

14. A gear assembly according to claim 12 or claim 13, wherein said torsional force between the second and fourth intermediate gears is provided by a torsion spring element or by a shaft that is pre-loaded under torsion.

15. A gear assembly according to any of claims 1 to 11, wherein the second coupling is configured such that the second intermediate gear is held in a fixed rotational position relative to the fourth intermediate gear.

16. A gear assembly according to any preceding claim, wherein the first coupling is configured such that the first and third intermediate gears rotate in the same rotational direction and/or the second coupling is configured such that the second and fourth intermediate gears rotate in the same rotational direction.

17. A gear assembly according to any preceding claim, wherein the input drive gear is coupled to a stepper motor that is configured to drive the input drive gear.

18. A gear system comprising first and second gear assemblies according to any of claims 1 to 16, wherein the output load gear of the first gear assembly is coupled to the input drive gear of the second gear assembly.

19. A structure for deployment in space comprising the gear assembly according to any preceding claim.

20. A gear assembly comprising a first gear, a second gear, a rotatable hub and a torsional spring element, wherein the rotatable hub is rigidly coupled to the first gear and is rotatably coupled to the second gear and is rotatably biased relative to the second gear in a first rotational direction by the torsional spring element.

21. A gear assembly according to claim 20, wherein the second gear comprises a radially inwardly facing surface and a first end of the torsional spring element is mounted to said radially inwardly facing surface, and wherein the rotatable hub comprises a radially outwardly facing surface and a second end of the torsional spring element is mounted to said radially outwardly facing surface.

22. A gear assembly according to claim 20 or claim 21, wherein the rotatable hub is disposed within the second gear and is concentrically arranged therewith.

23. A gear assembly according to any of claims 20 to 22, wherein the torsional spring element is integrally formed with the second gear and the rotatable hub.

24. A gear assembly according to any of claims 20 to 23, wherein the spring element comprises a curved portion of resilient material that is configured so that it is straightened when the first gear is rotated relative to the second gear in a second rotational direction opposite the first rotational direction.
